# EUROPÄISCHE PATENTSCHRIFT

(11) **EP 1 064 808 B1**
(45) Veröffentlichungstag und Bekanntmachung des Hinweises auf die Patenterteilung: **23.03.2005**
(21) Anmeldenummer: 00908923.6
(22) Anmeldetag: 14.01.2000
(51) Int. Cl.: H04Q 7/36

(54) **VERFAHREN ZUM AUTOMATISCHEN ENTWURF ZELLULARER MOBILIFUNKNETZE**
METHOD FOR AUTOMATICALLY DESIGNING CELLULAR MOBILE RADIOTELEPHONE NETWORKS
PROCEDE POUR L'ETABLISSEMENT AUTOMATIQUE DE PLANS DE RESEAUX DE RADIO TELEPHONIE MOBILE CELLULAIRE

(30) Priorität: 14.01.1999 DE 19901247
(43) Veröffentlichungstag der Anmeldung: 03.01.2001
(73) Patentinhaber: T-Mobile Deutschland GmbH, 53227 Bonn (DE)
(72) Erfinder: CLEMENS, Jürgen, D-21680 Stade (DE); MENDE, Wolf, D-53229 Bonn (DE); SCHULTZE, Norbert, D-53859 Niederkassel (DE)
(74) Vertreter: Riebling, Peter, Dr.-Ing.
(86) Internationale Anmeldenummer: PCT/DE2000/000129
(87) Internationale Veröffentlichungsnummer: WO 2000/042799

(56) Entgegenhaltungen:
- US-A- 5 561 841
- MENDE W ET AL: "MOBILE RADIO NETWORK MANAGEMENT SUPPORTED BY A PLANNING TOOL" IEEE NETWORK OPERATIONS AND MANAGEMENT SYMPOSIUM,US,NEW YORK, NY: IEEE, Bd. CONF. 10, 1998, Seiten 483-492, XP000799519 ISBN: 0-7803-4352-2
- TUTSCHKU K ET AL: "ICEPT - AN INTEGRATED CELLULAR NETWORK PLANNING TOOL" IEEE VEHICULAR TECHNOLOGY CONFERENCE,US,NEW YORK, IEEE, Bd. CONF. 47, 1997, Seiten 765-769, XP000736711 ISBN: 0-7803-3660-7

## Beschreibung

Die vorliegende Erfindung betrifft ein Verfahren zum automatischen Entwurf zellularer Mobilfunknetze nach den Merkmalen des Oberbegriffs des Patentanspruchs 1.

Ziel der praktischen Funknetzplanung zum Entwurf zellularer Mobilfunknetze ist es, möglichst vielen Teilnehmern eine möglichst hohe Dienstgüte zu bieten, wobei von vorgegebenen Randbedingungen wie z.B. Wellenausbreitungseigenschaften, Verfügbarkeit von Festsenderstandorten, nutzbares Frequenzspekrum, zu erwartendes Verkehrsaufkommen, Verkehrsverteilung, etc. ausgegangen werden muss.

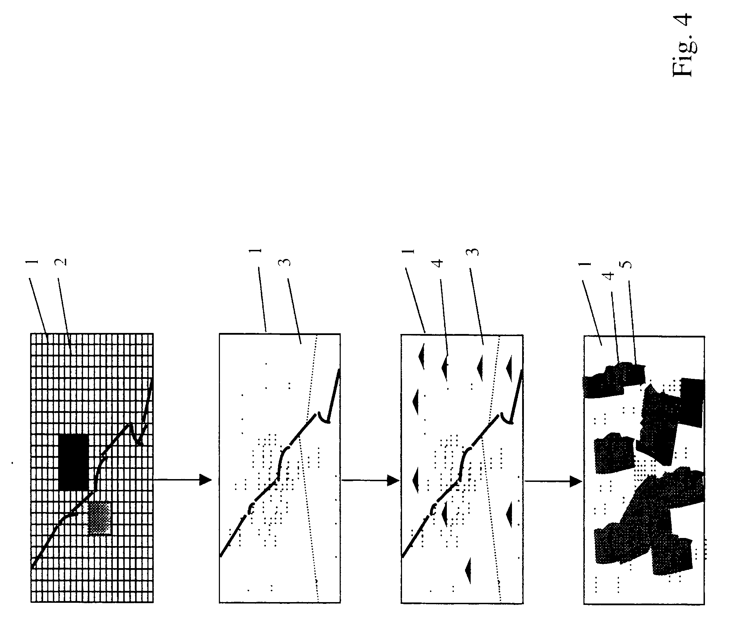

In der Anfangszeit des Mobilfunks wurde die Funknetzplanung durch einen Funknetzplaner im wesentlichen manuell durchgeführt. Aufgrund immer grösserer und leistungsfähigerer Netze wurde angestrebt, immer mehr Teilschritte des Planungsverfahrens zu automatisieren. Dies erforderte leistungsfähige Rechner, die erst in letzer Zeit zur allgemeinen Verfügung stehen.
Bekannte realisierte oder in Entwicklung befindliche Verfahren zum automatischen Entwurf, zur automatisierten Planung und/ oder Optimierung zellularer Mobilfunknetze unter Berücksichtigung der geographischen Bedingungen und/oder des Teilnehmerverhaltens im Planungsgebiet beruhen auf der Gesamtheit oder auf Teilen des folgenden, allgemeinen Verfahrens, das in Figur 4 schematisch dargestellt ist.

In einem ersten Schritt erfolgt die Vorverarbeitung der raumbezogenen Daten des Planungsgebiets. Unter raumbezogenen Daten versteht man z.B. die zu erwartende raumbezogene Funkverkehrsverteilung, die Funkverkehrsdichte, topographische Daten, Verkehrswege (Strassen, Bahnlinien) etc. In Figur 4 ist schematisch ein betrachtetes Planungsgebiet 1 dargestellt, welches in einzelne Flächenquadrate 2 unterteilt ist. Für jedes Flächenquadrat ist eine prognostizierte, d.h. zu erwartende Verkehrsdichte dargestellt. Je dunkler die dargestellte Graufärbung, desto höher ist die erwartete Verkehrsdichte.
In einem zweiten Schritt erfolgt eine Darstellung der raumbezogenen Daten als verdichtete und normierte Merkmale, die im Beispiel als normierte Dichtepunkte 3 dargestellt sind. Die verdichteten und normierten Merkmale werden mit Algorithmen zur Berechnung der geographischen Lage der Standorte für die Basisstationen 4 des Mobilfunknetzes verarbeitet.
Schließlich erfolgt in einem dritten Schritt die Verarbeitung der Standorte der Basisstationen 4 und der verdichteten, normierten Merkmale mit Algorithmen zur Berechnung der Parameter der Basisstationen des Mobilfunknetzes. Diese Parameter sind u.a. Sendeleistung, Frequenzen, Antennenparameter, etc. In Fig. 4, unten, sind beispielsweise die vorgeschlagenen Versorgungsgebiete 5 der einzelnen Basisstationen 4 dargestellt.
Es ergibt sich ein grobes Planungsmodell, welches nun durch manuelle Arbeit zu optimieren ist. Im Beispiel sind noch Lücken zwischen den Versorgungsgebieten 5 der Basisstationen 4 vorhanden, die durch weitere Planungsmassnahmen wie z.B. Einrichtung zusätzlicher Basisstationsstandorte, Erhöhung der Sendeleistungen etc. geschlossen werden müssen.

Weiterhin ist aus der Veröffentlichung MENDE Wolf, Mobile radio network management supported by a planning tool, IEEE Network Operations and Management Symposium, Februar 1918, New York, Seiten 483-492 ein Verfahren für den Entwurf zellularer Mobilfunknetze bekannt.

Die bekannten Verfahren sind entweder nur für Teilaufgaben des automatischen Netzentwurfs einsetzbar oder beinhalten grundsätzliche Probleme:

Es ist bisher kein automatisches Verfahren bekannt, das durch seine Anwendung einen vollständigen Netzentwurf erzeugt, der in seiner Qualität mit Ergebnissen der manuellen Funknetzplanung vergleichbar ist.

Ferner ist kein automatisches Verfahren bekannt, das durch seine Gestaltung die Qualität der Ergebnisse des automatischen Netzentwurfs im Vergleich zu einem manuell geplanten oder in Betrieb befindlichen Netz oder Teilnetz bewerten und diese Qualitätsmaße im Ergebnis ausweisen kann.

Es ist kein automatisches Verfahren bekannt, das durch seine Gestaltung parallel und ohne Veränderung der Operationen für unterschiedliche Mobilfunkstandards (GSM, DCS 1800,CDMA, analoge Standards, zukünftige Standards) anwendbar ist.

Es ist auch kein automatisches Verfahren bekannt, daß durch seine Gestaltung die Wiederverwendung vollständiger manueller Planungsergebnisse und Planungserfahrungen für neu zu planende Mobilfunknetze durch automatische Operationen realisiert.

Es ist kein automatisches Verfahren bekannt, daß durch seine Gestaltung die Berücksichtigung der Besonderheiten unterschiedlicher Systemtechniken beim Entwurf von Netzen oder Teilnetzen realisiert.

Es ist weiterhin kein automatisches Verfahren bekannt, daß durch seine Gestaltung den Entwurf von Mobilfunknetzen, die unterschiedliche Mobilfunkstandards verbinden (z.B. GSM 900 und DCS 1800), realisiert.

Der vorliegenden Erfindung liegt die Aufgabe zugrunde, ein Verfahren zum automatischen Entwurf zellularer Mobilfunknetze vorzuschlagen, welches einen vollständigen Netzentwurf erzeugt, der in seiner Qualität mit Ergebnissen einer manuellen Funknetzplanung vergleichbar ist.

Diese Aufgabe wird durch die kennzeichnenden Merkmale des Patentanspruchs 1 gelöst.

Die Erfindung beruht auf einem Verfahren, das aus vorgefertigten Planungsdaten realisierter, geplanter oder abstrakter zellularer Mobilfunknetze oder Teilnetze und den raumbezogenen Daten ihrer Planungsgebiete (Referenzdaten) sowie den raumbezogenen Daten eines neuen Planungsgebiets (raumbezogene Planungsdaten) durch Verarbeitung der Relationen zwischen den raumbezogenen Referenz- und Planungsdaten sowie Anwendung von Koordinaten- und Winkeltransformationen auf die Standortkoordinaten der Basisstationen und Hauptstrahlrichtungen der Antennen von Basisstationen der Referenzdaten automatisch einen Entwurf des zellularen Mobilfunknetzes oder Teilnetzes für das neue Planungsgebiet erzeugt.

Ein wesentlicher Vorteil des erfindungsgemässen Verfahrens ist, daß damit automatisch ein realistischer, vollständiger Netzentwurf (vollständige Netzdaten und Netzparameter) erzeugt wird, der vom Anwender direkt zur Quantifizierung des Investitions- und Planungsaufwandes und für die weitere planerische Bearbeitung genutzt werden kann.

Ferner werden durch das beschriebene Verfahren die erzeugten Netze oder Teilnetze automatisch mit Qualitätsmaßen bewertet. Damit wird sichergestellt, daß für den Anwender des Verfahrens transparente Informationen über den planerischen Aufwand der weiteren Bearbeitung des Netzentwurfs bereitgestellt werden.

Ein weiterer Vorteil besteht darin, daß eine gezielte, automatisierte Wiederverwendung manueller Planungsergebnisse und die normierte Speicherung von Know-How erzielt wird. Das führt zu einem erheblich verringerten Arbeits- und Rechenaufwand.

Ferner realisiert das erfindungsgemässe Verfahren eine wesentliche Qualitätsverbesserung der Funktion "synthetisches Netz" von Funknetzplanungstools durch Berücksichtigung der raumbezogenen Daten des Planungsgebiets (z.B. ein verkehrsangepaßtes synthetisches Netz).

Weiterhin ermöglicht das beschriebene Verfahren eine neue Klasse von Analysefunktionen eines Funknetzplanungstools, indem Netzbereiche mit ähnlichen oder übereinstimmenden raumbezogenen Bedingungen automatisch verglichen werden können.

Zudem realisiert das erfindungsgemässe Verfahren ohne Veränderung der Operationen Netzentwürfe für unterschiedliche Mobilfunkstandards und Systemtechniken durch Verwendung gleich strukturierter Referenzdaten der vorgefertigten Netze.

Zur Vorbereitung und Durchführung des beschriebenen Verfahrens werden Arbeitsschritte, Tätigkeiten und Verfahren verwendet, die einem Fachmann vertraut sind und daher hier nicht näher erläutert werden. Diese sind z.B.:
- die Erfassung, Speicherung, Prüfung und Verarbeitung raumbezogener Rasterund/oder Vektordaten,
- die Berechnung von ein- oder mehrdimensionalen Merkmalen raumbezogener Raster- und/oder Vektordaten,
- die Berechnung der Ähnlichkeit von Objekten mit mehrdimensionalen Merkmalsvektoren, einschließlich Clusterverfahren, Fuzzy- und Neuroalgorithmen,
- alle Aspekte der Normen zellularer Mobilfunknetze, der Systemtechnik und der Endgerätetechnik zellularer Mobilfunknetze, und
- alle Aspekte von Modellen und Verfahren zur Ausbreitung, Versorgung, Interferenz, des Frequenzbedarfs, der Frequenzplanung und der Kapazität zellularer Mobfunknetze und der Meßdaten beim Betrieb eines zellularen Mobilfunknetzes.

Vorteilhafte Ausführungsformen und Weiterbildungen der Erfindung sind Gegenstand der abhängigen Patentansprüche.

Aufgrund der dem Verfahren zugrundeliegenden Ähnlichkeitsberechnungen zwischen den Referenzdaten und den Planungsdaten ist es möglich, die Qualität des Netzentwurfs durch Quantifizierung der Relationen zwischen raumbezogenen Referenz- und Planungsdaten zu bewerten. Die Qualität bzw. die Übereinstimmung von Teilgebieten des Netzentwurfs mit Teilgebieten des Referenznetzes lässt sich z.B. durch eine Ziffer zwischen 0 und 1 ausdrücken, wobei 0 keine Übereinstimmung und 1 eine identische Übereinstimmung zwischen den Daten des Referenzgebiets und dem Planungsgebiet anzeigt. Damit ist es dem Netzplaner möglich, den Aufwand und die Kosten für eine eventuelle manuelle Nachbearbeitung des ermittelten Netzentwurfs schnell und relativ genau abzuschätzen.

Nachfolgend wird die Erfindung anhand eines Ausführungsbeispiels unter Bezugnahme auf mehrere Zeichnungsfiguren näher erläutert. Dabei gehen aus den Zeichnungen und ihrer Beschreibung weitere Merkmale und Vorteile der Erfindung hervor.
Figur 1 zeigt eine schematische Darstellung des erfindungsgemässen Verfahrens;
Figur 2 zeigt schematisch die Struktur der technischen Realisierung des Verfahrens:
Figur 3 zeigt ein Flussdiagramm der wichtigsten Verfahrensschritte;
Figur 4 zeigt allgemein die notwendigen Verfahrensschritte bei der (teil-) automatisierten Funknetzplanung gemäss dem Stand der Technik.

Erfindungsgemäss wird von folgenden Überlegungen ausgegangen:
Zwei geographische Flächen mit identischen raumbezogenen Merkmalen können durch Mobilfunknetze oder Teilnetze versorgt werden, die bis auf die raumbezogenen Parameter (Koordinaten der Basisstationen, Hauptstrahlrichtungen der Antennen) identisch sind.
Daraus folgt, daß sich zwei geographische Flächen mit identischen raumbezogenen Merkmalen durch identische raumbezogene Dateninhalte repräsentieren lassen, wobei die Dateninhalte maschinell verarbeitbar sind.

Die Vorüberlegungen basieren darauf, daß die Anzahl der geplanten und realisierten zellularen Mobilfunknetze und Teilnetze eines Netzbetreibers wie T-Mobil sehr groß ist. Geht diese Anzahl theoretisch gegen unendlich, so ist für jedes neue Planungsgebiet bereits ein Planungsgebiet mit identischen raumbezogenen Dateninhalten vorhanden. Das lokal vorhandene Mobilfunknetz kann, durch Transformation der raumbezogenen Parameter, zum Netzentwurf für das neue Planungsgebiet verarbeitet werden.
Bei einer realistischen Anzahl geplanter und realisierter Mobilfunknetze eines Netzbetreibers wie T-Mobil ist für jedes neue Planungsgebiet genau dann bereits ein Planungsgebiet mit identischen raumbezogenen Dateninhalten vorhanden, wenn die Größe der Fläche des Planungsgebiets theoretisch gegen Null geht bzw. sich der Auflösung der raumbezogenen Daten (z.B. 5 X 5 Bogensekunden) nähert.
Je kleiner das Planungsgebiet und das mit dieser geographischen Fläche verbundene Teilnetz ist, desto größer ist die Wahrscheinlichkeit für vorhandene Identitäten in den raumbezogenen Dateninhalten.

Die realistische, praktische Anwendung erfolgt dann, wenn die raumbezogenen Dateninhalte eines vorhandenen und eines neuen Planungsgebiets durch Einführung eines Ähnlichkeits-Kriteriums als identisch betrachtet werden. Der Grad der Ähnlichkeit der raumbezogenen Dateninhalte ist ein Qualitätsmaß für die Paßfähigkeit des Entwurfs für das neue zellulare Mobilfunknetz oder Teilnetz.

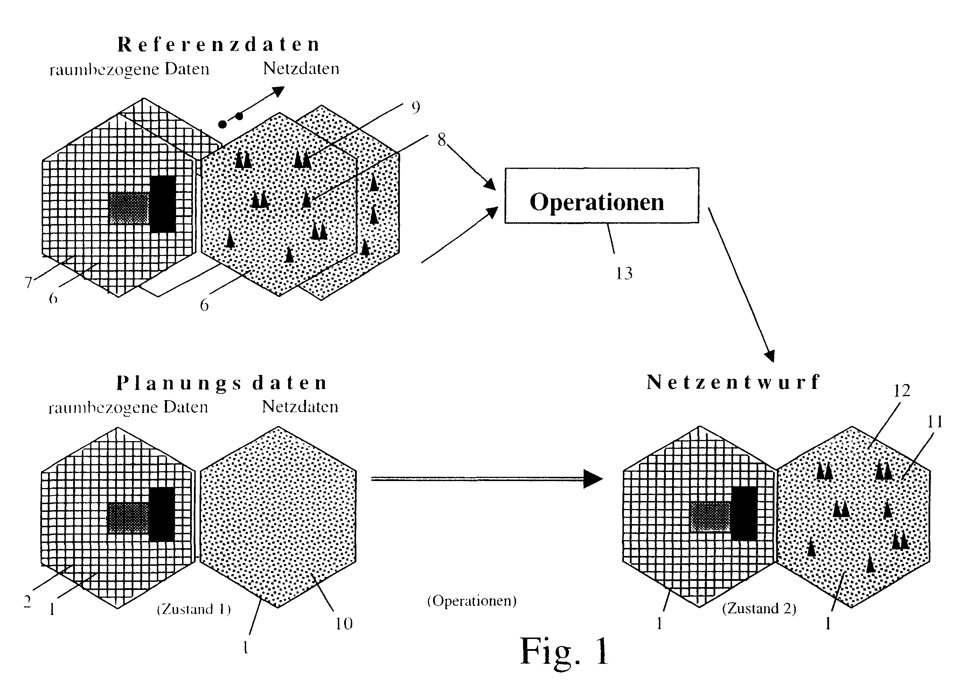

In Figur 1 ist schematisch der Ablauf des erfindungsgemässen Verfahrens dargestellt.

Die raumbezogene Planungsdaten des Planungsgebiets 1 sind bekannt. Die Planungsdaten wurden dabei vorher durch bekannte Verfahren und Massnahmen ermittelt und können enthalten:
- Höhendaten,
- Landnutzungsdaten,
- Verkehrswege (Straßendaten, Eisenbahndaten, Schiffahrtslinien),
- Verkehrsdaten (z.B. Verkehrsmengen-Verteilung in den Flächenquadraten 2),
- Teilnehmerverteilung,
- Bevölkerungsverteilung
oder spezielle, geeignete Teilmengen dieser Gesamtmenge.

Die Netzdaten 10, die das gesuchte Netz oder Teilnetz beschreiben, sind noch nicht bekannt und sollen durch das Verfahren ermittelt werden.

Aus bereits durchgeführten Funknetzplanungen in einem betrachteten Planungsgebiet 6 sind die Netzdaten und Parameter bekannt und stellen eine entsprechende Menge Referenzdaten dar, die über eineindeutige Relation mit den Planungsgebieten dieser vorgefertigten, geplanten oder realisierten Mobilfunknetze oder Teilnetze verbunden sind: Diese Daten enthalten ebenfalls:
- Höhendaten,
- Landnutzungsdaten,
- Verkehrswege (Straßendaten, Eisenbahndaten, Schiffahrtslinien),
- Verkehrsdaten (z.B. Verkehrsmengen-Verteilung in den Flächenquadraten 7),
- Teilnehmerverteilung,
- Bevölkerungsverteilung
oder spezielle, geeignete Teilmengen dieser Gesamtmenge.

Damit stehen Referenzdaten zur Verfügung, welche sowohl die Teilmenge der Netzdaten und Netzparameter der vorgefertigten Mobilfunknetze (z.B. Standorte der Basisstationen 9 und sich daraus ergebende Feldstärkeverteilungen 8) als auch, über eindeutige Relationen verbunden, die Teilmenge der raumbezogenen Daten ihrer Planungsgebiete enthalten.

Es werden nun erfindungsgemäss Operationen 13 durchgeführt, die eine Überführung aus dem Zustand vorgefertigter Mobilfunknetze oder Teilnetze 6 in den Zustand Netzentwurf für ein neues Planungsgebiet 1 realisieren.
Die Teiloperationen sind:
- Merkmalsberechnung raumbezogener Referenz- und Planungsdaten 7, die als ein- oder mehrdimensionale Merkmale oder Parameter dargestellt werden,
- Ähnlichkeitsberechnung mehrdimensionaler Merkmale des Planungsgebietes 1 und des Referenzgebiets 6,
- Abbildung der Standorte der Basisstationen des Referenzgebiets 6 auf das Planungsgebiet 1 durch Koordinatentransformation der Standorte der Basisstationen 9 in geographischer Länge, Breite und Drehung bezogen auf den Nullmeridian,
- Winkeltransformation der Hauptstrahlrichtungen der Antennen der Basisstationen 9 für Drehungen bezogen auf den Nullmeridian.

Es ergibt sich ein Netzentwurf, der aus Planungsdaten und Parameter des automatisch erzeugten, vollständigen Mobilfunknetzes oder Teilnetzes besteht (Standort der Basisstationen 12, Parameter zur Berechnung der Feldstärkeverteilung 11, etc.). Je genauer das Referenzgebiet und dessen raumbezogene Daten mit dem Planungsgebiet und dessen raumbezogenen Daten übereinstimmt, desto grösser ist die Übereinstimmung der Netzdaten des Netzentwurfs mit den Daten des Referenz-Netzentwurfs.

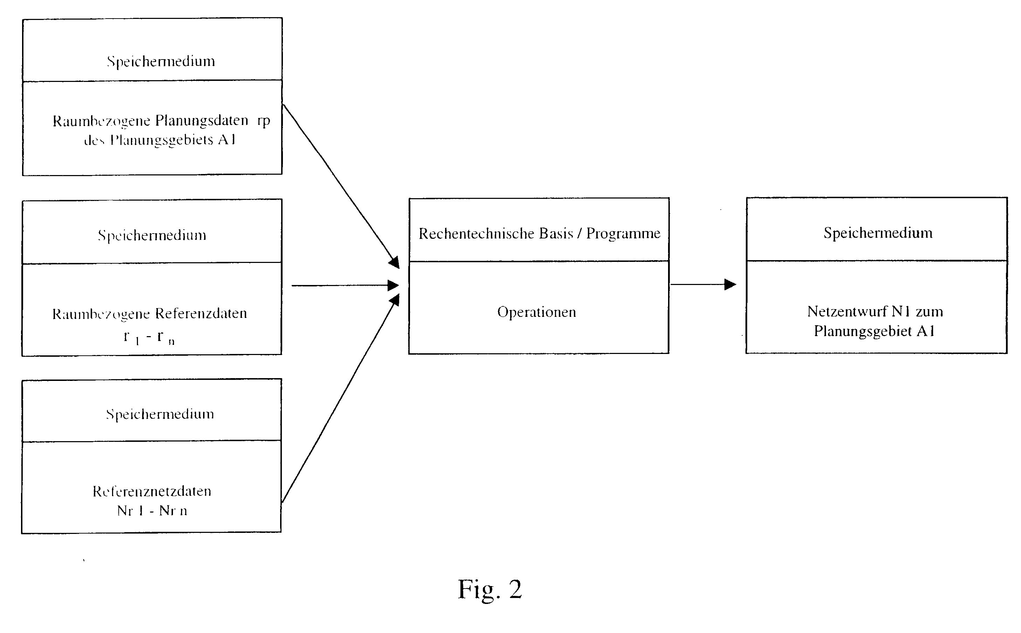

Gemäss Figur 2 ergibt sich also ein Verfahren zum automatischen Entwurf zellularer Mobilfunknetze, bei dem
- ohne notwendigen Eingriff des Menschen
- für ein zu planendes Mobilfunknetz oder Teilnetz N1
- auf einer geographischen Fläche 1
- ein reales oder abstraktes Mobilfunknetz oder Teilnetz N2 auf einer realen oder abstrakten geographischen Fläche 6
- genau dann in den raumbezogenen Parametern Standortkoordinaten der Basisstationen 9,12 und Antennen-Hauptstrahlrichtungen verändert
- und auf der geographischen Fläche 1 durch Koordinatentransformation der geographischen Länge. Breite sowie der Drehung in Bezug auf den Nullmeridian im Netz N1 substituiert wird,
- wenn die Merkmale der raumbezogenen Daten der geographischen Flächen 1 und 6 gleich sind oder nach einem bestimmten Kriterium gleichgesetzt werden.

Zur technischen Realisierung des erfindungsgemässen Verfahrens muss eine dem Stand der Technik entsprechende rechentechnische Hard- und Software eines Funknetzplanungstools, einschließlich der Ein-/ Ausgabeperipherie, um Programme zur Realisierung der Operationen des erfundenen Verfahrens ergänzt werden.
Es sind dem Stand der Technik entsprechende Speichermedien für raumbezogene Raster- und Vektordaten vorzusehen.
Ferner sind dem Stand der Technik entsprechende Speichermedien für Planungsdaten und Parameter geplanter oder realisierter zellularer Mobilfunknetze oder Teilnetze vorzusehen. Die Daten der Referenzdaten sind in entsprechenden Datenbanken abrufbar.

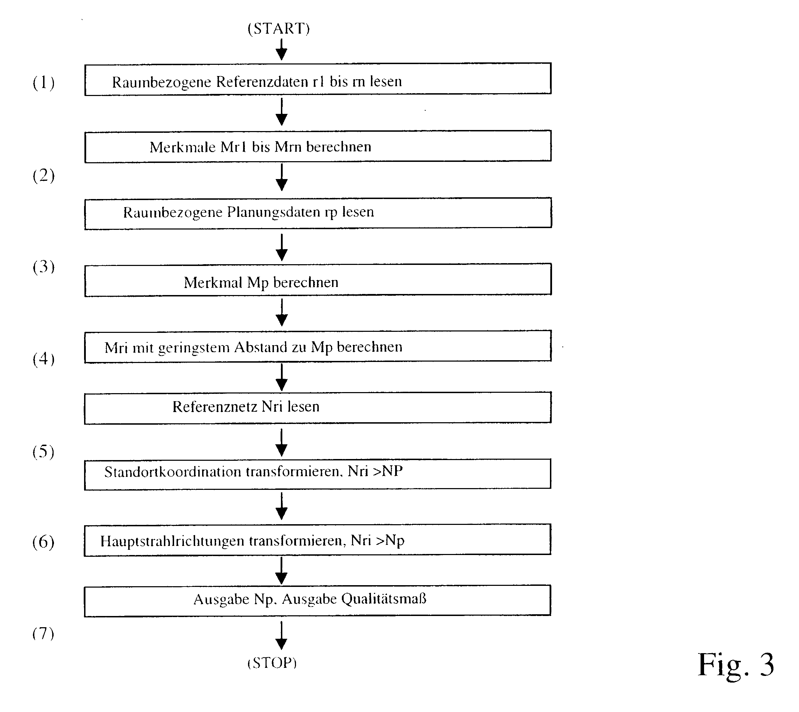

Figur 3 beschreibt nochmals im einzelnen die Schritte des automatisierten Planungsverfahrens:
(1) Lesen der raumbezogenen Referenzdaten r1 bis rn:
   Es wird ein Zugriff auf die raumbezogenen Daten der Referenznetze (jeweils repräsentiert durch ihre raumbezogenen Referenzdaten **und** Ihre Referenznetzdaten) hergestellt.
(2) Berechnen der Merkmale Mr1 bis Mrn:
   Zu jedem Referenznetz ri, i=1 bis n, wird ein Merkmal Mri berechnet. Einsetzbar sind sowohl allgemeine, dem Stand der Technik entsprechende Verfahren der Mustererkennung und Datenverdichtung als auch normierte Speichertechniken der raumbezogenen Daten als Matrix oder Knoten/Kanten-Vektor ohne spezielle Datenverdichtungen.
(3) Lesen der raumbezogene Planungsdaten rp:
   Zugriff auf die raumbezogenen Daten des Planungsgebiets herstellen
(4) Berechnen der Merkmale Mp:
   Berechnungen entsprechend Schritt (2) für die raumbezogenen Planungsdaten
(5) Berechnen des Merkmals Mri mit geringstem Abstand zu Merkmal Mp:
   Durch Anwendung von dem Stand der Technik entsprechenden Verfahren zur Berechnung der Ähnlichkeit von Objekten mit mehrdimensionalen Merkmalsvektoren (z.B. Clusterverfahren) wird das Merkmal Mri (Referenznetzdaten) mit dem geringsten Abstand zum Merkmal Mp (Planungsdaten) im Merkmalsraum berechnet.
   Durch die eineindeutige Relation zwischen raumbezogenen Referenzdaten und Referenznetzdaten ist über den Index i das zugehörige Referenznetz Nri bestimmt.
(6) Lesen der Daten des Referenznetzes Nri:
   Zugriff auf die Netzdaten und Parameter Nr1 bis Nrn des Referenznetzes herstellen
(7) Transformation der Standortkoordinaten Nri -> Np
   Geographische Kongruenz der raumbezogenen Referenzdaten i und Planungsdaten p durch Verschiebung (geographische Länge und Breite) und Drehung mit Bezug zum Nullmeridian herstellen. Analoge Koordinaten-Transformation der Standorte der Basisstationen (Anwendung Addition, Subtraktion, Kreisfunktion).
(8) Transformation der Hauptstrahlrichtungen Nri -> Np
   Analog zu Schritt (7), Transformation der Winkel der Hauptstrahlrichtungen der Antennen der Basisstationen mit Bezug zur geographischen Drehung von Nri zu Np (Anwendung von Addition und Subtraktion).
(9) Ausgabe der Daten des Netzentwurfs Np:
   Speichern der Daten des Netzentwurfs Np auf das Speichermedium Ausgabe des Abstandes der Merkmale Mri (raumbezogene Referenzdaten) und Mp (raumbezogene Planungsdaten) im mehrdimensionalen Merkmalsraum als Qualitätsmaß für die Paßfähigkeit des automatisch erzeugten Netzentwurfs Np.

### Zeichnungslegende

- 1: Planungsgebiet
- 2: Flächenquadrat
- 3: Dichtepunkte
- 4: Basisstation
- 5: Versorgungsgebiet
- 6: Referenzgebiet
- 7: Flächenquadrat
- 8: Feldstärkeverteilung
- 9: Basisstation
- 10: zu ermittelnde Netzdaten
- 11: Feldstärkeverteilung
- 12: Basisstation
- 13: Operationen

## Patentansprüche

1. Verfahren zum automatischen Entwurf zellularer Mobilfunknetze,
**dadurch gekennzeichnet,**
**daß** aus vorhandenen Planungsdaten realisierter, bereits geplanter oder abstrakter zellularer Mobilfunknetze oder Teilnetze (N2) und den raumbezogenen Daten ihrer Planungsgebiete (6) sowie den raumbezogenen Daten eines neuen Planungsgebiets (1) durch Verarbeitung der Relationen zwischen den raumbezogenen Referenz- und Planungsdaten sowie Anwendung von Koordinaten- und Winkeltransformationen auf die Standortkoordinaten der Basisstationen (9) und Hauptstrahlrichtungen der Antennen der Basisstationen (9) der Referenzdaten automatisch ein Entwurf des zellularen Mobilfunknetzes oder Teilnetzes (1) für das neue Planungsgebiet (N1) erzeugt wird.

2. Verfahren nach Anspruch 1, **dadurch gekennzeichnet, daß** die Qualität des Netzentwurfs durch Quantifizierung der Relationen zwischen raumbezogenen Referenz- und Planungsdaten bewertet wird.

3. Verfahren nach Anspruch 1 oder 2, **dadurch gekennzeichnet, daß** die raumbezogenen Planungsdaten in bekannter Weise erfasst, gespeichert, geprüft und verarbeitet werden.

4. Verfahren nach einem der Ansprüche 1 bis 3, **dadurch gekennzeichnet, daß** die raumbezogenen Planungsdaten als ein- oder mehrdimensionale Merkmale und/oder Parameter dargestellt werden und in einer Datenbasis vorgehalten werden.

5. Verfahren nach einem der Ansprüche 1 bis 4, **dadurch gekennzeichnet, daß** die raumbezogenen und netzbezogenen Referenzdaten in einer Datenbasis vorgehalten werden und als ein- oder mehrdimensionale Merkmale und/oder Parameter dargestellt werden.

6. Verfahren nach einem der Ansprüche 1 bis 5, **dadurch gekennzeichnet, daß** ohne notwendigen Eingriff des Menschen, für ein zu planendes Mobilfunknetz oder Teilnetz (N1) auf einer geographischen Fläche (1) ein reales oder abstraktes Mobilfunknetz oder Teilnetz (N2) auf einer realen oder abstrakten geographischen Fläche (6) genau dann in den raumbezogenen Parametern Standortkoordinaten und Antennen-Hauptstrahlrichtungen verändert und auf der geographischen Fläche (1) durch Koordinatentransformation der geographischen Länge, Breite sowie der Drehung in Bezug auf den Nullmeridian im zu planenden Teilnetz (N1) substituiert wird, wenn die Merkmale der raumbezogenen Daten der geographischen Flächen (1) und (6) gleich sind oder nach einem bestimmten Kriterium gleichgesetzt werden.

## Claims

1. Method for automated design of cellular mobile radio telephone networks, **characterised in that** a design of the cellular mobile radio telephone network or partial network (N1) is automatically generated for a new planning area (1) from existing planning data of implemented, already planned or abstract cellular mobile radio telephone networks or partial networks (N2) and the space-related data of their planning areas (6) and also the space-related data of the new planning area (1) by processing the relations between space-related reference and planning data and application of coordinates and angle transformations to the position coordinates of the base stations (9) and main emission directions of the antennae of the base stations (9) of the reference data.

2. Method according to claim 1, **characterised in that** the quality of the network design is evaluated by quantifying the relations between space-related reference and planning data.

3. Method according to claim 1 or 2, **characterised in that** the space-related planning data are acquired, stored, checked and processed in a known way.

4. Method according to one of claims 1 to 3, **characterised in that** the space-related planning data are represented as one- or multi-dimensional features and/or parameters and kept available in a database.

5. Method according to one of claims 1 to 4, **characterised in that** the space-related and network-related reference data are kept available in a database and represented as one- or multi-dimensional features and/or parameters.

6. Method according to one of claims 1 to 5, **characterised in that** without the need for human intervention, for a mobile radio telephone network or partial network (N1) to be planned over a geographical area (1) a real or abstract mobile radio telephone network or partial network (N2) over a real or abstract geographical area (6) is changed in its space-related parameters position coordinates and antennae main emission directions and is substituted over the geographical area (1) by coordinate transformation of the longitude, latitude and the rotation in relation to the zero meridian in the partial network (N1) to be planned precisely when the features of the space-related data of the geographical areas (1) and (6) are identical or are equated according to a specific criterion.

## Revendications

1. Procédé pour l'établissement automatique de plans de réseaux de radio téléphonie mobile cellulaire, **caractérisé en ce qu'**un plan du réseau ou de la partie de réseau (N1) de radio téléphonie mobile cellulaire est établi automatiquement pour la nouvelle zone de (1) planification à partir des données de planification présentes des réseaux ou parties de réseau (N2) de radio téléphonie mobile cellulaire abstraits ou déjà planifiés et des données à référence spatiale de leurs zones de planification (6) et à partir des données à référence spatiale d'une nouvelle zone de planification (1), en traitant les relations entre les données de référence et de planification à référence spatiale et en utilisant les transformations des coordonnées et des angles sur les coordonnées du site des stations de base (9) et des principales directions de rayonnement des antennes des stations de base (9) des données de référence.

2. Procédé selon la revendication 1, **caractérisé en ce que** la qualité du plan de réseau est évaluée à travers la quantification des relations entre les données de référence et de planification à référence spatiale.

3. Procédé selon la revendication 1 ou 2, **caractérisé en ce que** les données de planification à référence spatiale sont saisies, mémorisées, contrôlées et traitées de manière connue.

4. Procédé selon l'une quelconque des revendications 1 à 3, **caractérisé en ce que** les données de planification à référence spatiale sont représentées comme des caractéristiques uni ou pluridimensionnelles et sont conservées dans une base de données.

5. Procédé selon l'une quelconque des revendications 1 à 4, **caractérisé en ce que** les données de référence à référence spatiale relatives au réseau sont conservées dans une base de données et sont représentées comme des paramètres et/ou des caractéristiques uni ou pluridimensionnels.

6. Procédé selon l'une quelconque des revendications 1 à 5, **caractérisé en ce que** sans intervention nécessaire de l'homme, pour un réseau ou une partie de réseau (N1) de radio téléphonie mobile à planifier sur une zone géographique (1), un réseau ou une partie de réseau (N2) de radio téléphonie mobile abstrait ou réel d'une zone géographique (6) réelle ou abstraite peut être modifié à l'endroit même des paramètres à référence spatiale des coordonnées du site et des principales directions de rayonnement des antennes et être substitué dans la partie de réseau (N1) à planifier à la zone géographique (1) en transformant les coordonnées de la longueur, de la largeur géographique ainsi que de la rotation par rapport au méridien zéro, lorsque les caractéristiques des données à référence spatiale des zones géographiques (1) et (6) sont identiques ou mises sur le même niveau suivant un critère déterminé.
